**Europäisches Patentamt**

**European Patent Office**

**Office européen des brevets**

(19)

(11) Veröffentlichungsnummer : **0 185 842 B2**

(12)

# NEUE EUROPÄISCHE PATENTSCHRIFT

(45) Veröffentlichungstag der neuen Patentschrift :
01.07.92 Patentblatt 92/27

(51) Int. Cl.$^5$ : **B23Q 3/157**

(21) Anmeldenummer : **85109949.9**

(22) Anmeldetag : **07.08.85**

(54) **Einrichtung zum Verbinden eines auswechselbaren Werkzeugkopfes mit einer Werkzeugspindel.**

(30) Priorität : **19.12.84 DE 3446368**
**24.06.85 DE 3522555**

(43) Veröffentlichungstag der Anmeldung :
**02.07.86 Patentblatt 86/27**

(45) Bekanntmachung des Hinweises auf die
Patenterteilung :
**12.10.88 Patentblatt 88/41**

(45) Bekanntmachung des Hinweises auf die
Entscheidung über den Einspruch :
**01.07.92 Patentblatt 92/27**

(84) Benannte Vertragsstaaten :
**AT BE DE FR GB IT LU NL SE**

(56) Entgegenhaltungen :
**CH-A- 504 930**
**DE-A- 2 303 018**
**DE-A- 3 007 440**

(56) Entgegenhaltungen :
**DE-A- 3 045 536**
**DE-B- 1 752 833**
**DE-B- 1 777 019**
**GB-A- 2 094 191**
**US-A- 1 361 773**
**US-A- 3 753 624**
**US-A- 4 122 755**

(73) Patentinhaber : **GTE VALENITE**
**CORPORATION**
**750, Stephenson Highway P.O. Box 3950**
**Troy Michigan 48007 (US)**

(72) Erfinder : **Horsch, Wilfried**
**Pfaffenklinge 90**
**W-6951 Obrigheim (DE)**

(74) Vertreter : **Wehnert, Werner et al**
**Patentanwälte Dipl.-Ing. Hauck, Dipl.-Phys.**
**Schmitz, Dipl.-Ing. Graalfs, Dipl.-Ing. Wehnert,**
**Dipl.-Phys. Carstens, Dr.-Ing.Döring**
**Mozartstrasse 23**
**W-8000 München 2 (DE)**

EP 0 185 842 B2

**Beschreibung**

Die Erfindung betrifft eine Einrichtung zum Verbinden eines auswechselbaren Werkzeugkopfes mit der Spindel einer numerisch gesteuerten Werkzeugmaschine.

Bei einer von der Patentinhaberin entwickelten Einrichtung dieser Gattung, die in der älteren, jedoch nicht vorveröffentlichten und dahen entsprechend Artihel 54(3) EPÜ zu bewentenden WO-A-85/03467 gezeigt ist, besteht die Betätigungseinrichtung aus einem Gewindebolzen, der mit gegensinnigem Gewinde in Gewindebohrungen der beiden Keilstücke eingeschraubt ist. Zum Drehen des Gewindebolzens und damit zum radialen Verstellen der beiden Keilstücke sind seitliche Durchbrüche vorgesehen, durch die der Gewindebolzen von einem manuell oder maschinell betätigten Schlüssel erfaßt werden kann. Eine Verstellung der Keilstücke von der Seite aus ist manchmal nachteilig. Die Spannkräfte dürfen wegen der Gewindeverbindung zwischen Gewindebolzen und Keilstücken nicht zu groß gemacht werden. Ferner ist eine Kühlmittelzuführung durch den Gewindebolzen hindurch zum Werkzeug nicht möglich.

Aus DE-A-3 007 440 ist eine Einrichtung zum Verbinden eines auswechselbaren Werkzeugkopfes mit der Spindel einer Werkzeugmaschine bekannt, bei der in schrägen Bohrungen verschiebbare Spannstifte in ihrer ausgefahrenen Stellung in Vertiefungen des Werkzeugkopfes greifen und dadurch den Werkzeugkopf gegen die Spindel ziehen, während sie in ihrer eingefahrenen Stellung den Werkzeugkopf freigeben. Zum radialen Ausfahren der Spannstifte ist eine zentrale Betätigungsstange vorgesehen, die über einen konischen Kopfabschnitt an den Spannstiften angreift, während die Spannstifte durch die entsprechend geformten Vertiefungen des Werkzeugkopfes radial einwärts bewegt werden, wenn der Werkzeugkopf zum Werkzeugwechsel abgezogen wird. Die Verwendung von Spannstiften dürfte ebenfalls keine zu großen Spannkräfte zulassen. Das Abziehen des Werkzeugkopfes dürfte relativ große Kräfte erfordern, wenn sich die Spannstifte z.B. aufgrund von Werkzeugspänen verklemmt haben.

Der Erfindung liegt die Aufgabe zugrunde, eine Einrichtung der vorgenannten Art so auszubilden, daß sie durch die zentrale Betätigung trotz hoher Spannkräfte bequem gelöst werden kann, wobei ein störungsfreies Schließen und Lösen der Verbindung gewährleistet und eine Kühlmittelzuführung zum Werkzeug möglich sein soll.

Diese Aufgabe wird durch die im Patentanspruch 1 augegebene Erfindung gelöst.

Aus der DE-A-3 045 536 ist bereits bekannt eine Einrichtung zum Verbinden eines auswechselbaren Werkzeugmaschinenteils (Spannfutter) mit der Spindel einer Werkzeugmaschine, mit einem zur Spindelachse konzentrischen Zapfen, der in eine entsprechend dimensionierte Bohrung greift und in dem mehrere Keilstücke in zur Spindelachse radialer Richtung verschiebbar gelagert sind, und einer Betätigungseinrichtung zum Verstellen der Keilstücke zwischen einer Spannstellung, in der sie mit abgeschrägten Flächen in entsprechend abgeschrägte Vertiefungen der Bohrungswand greifen, um eine ringförmige Stirnfläche gegen eine weiter ringförmige Stirnfläche zu ziehen, und einer Freigabestellung, in der die Keilstücke radial nach innen aus den Vertiefungen in der Bohrungswand herausbewegt sind, um den Zapfen zum Werkzeugwechsel aus der Bohrung abziehen zu können, wobei die Betätigungseinrichtung eine Nockeneinrichtung umfaßt, über die die Keilstücke mit einer zur Spindelachse konzentrischen, hin- und herbewegbaren Betätigungsstange verbunden sind, wobei die Nockeneinrichtung Nockenansätze aufweist, die der Betätigungsstange zugeordnet sind und in entsprechend ausgebildeten Nockennuten der Keilstücke zwangsgeführt sind, um die Keilstücke in beiden radialen Richtungen verstellen zu können, und die Nockenansätze an einem Nockenteil vorgesehen sind, das an der Betätigungsstange angeformt ist.

Im Gegensatz zu diesem Stand der Technik grenzen bei der erfindungsgemäß ausgebildeten Einrichtung die aneinander zu ziehenden ringförmigen Stirnflächen jeweils an dem Zapfen bzw. an der Bohrung an, d.h. sie umgeben sie jeweils. Ferner ist der Anker an seinem von der Betätigunsstange abgewandten Ende mit einem zentrischen Führungszapfen versehen, der in einer im Zapfen gebildeten Kühlmittelbohrung abgedichtet geführt ist, wobei der Anker einschließlich eines Führungszapfens mit einer durchgehenden Kühlmittelbohrung versehen ist. Hierdurch wird erreicht, daß trotz einer lösbaren Verbindung zwischen Betätigungsstange und Anker der Anker sowohl im gelösten als auch im verbundenen Zustand der Betätigungsstange ausreichend geführt wird, so daß weder eine Verklemmung des Ankers bzw. der Keilstücke stattfinden noch bei Betätigung eine ungleichmäßige Bewegung der Keilstücke vorkommen kann. Es ist somit ein störungsfreies Schließen und Lösen der Verbindung gewährleistet.

Ferner sind die Keilstücke durch die erfindungsgemäß vorgesehene Nockeneinrichtung in beiden radialen Verstellrichtungen zwangsgeführt. Die beiden Keilstücke werden daher von der Betätigungsstange nicht nur in Spannrichtung, sondern auch in der Freigaberichtung verstellt, so daß sich die Keilstücke beim Abziehen des Werkzeugkopfes bereits in ihrer Freigabestellung befinden. Trotz Aufbringen hoher Spannkräte, was aufgrund der erfindungsgemäß ausgebildeten Nockeneinrichtung ohne weiteres möglich ist, läßt sich somit der Werkzeugkopf in besonders bequemer und einfacher Weise von der Spindel abziehen.

2

Ein besonderer Vorteil der erfindungsgemäß ausgebildeten Einrichtung besteht darin, daß sie bei Werkzeugköpfen mit Standardabmessungen eingesetzt werden kann, so daß sie in Verbindung mit herkömmlichen Werkzeughandhabungs - und Greifsystemen sowie mit herkömmlichen Magazinen verwendet werden kann. Nicht einmal eine besondere Spindelanpassung ist erforderlich, wenn die erfindungsgemäß ausgebildete Einrichtung zwischen einem an der Spindel befestigten Vorsatzflanschteil und dem Werkzeugkopf vorgesehen ist.

Ein weiterer Vorteil der erfindungsgemäß ausgebildeten Einrichtung besteht darin, daß sie mit Hilfe von zentralen Bohrungen in einfacher Weise eine Kühlmittelzuführung zum Werkzeug ermöglicht. Darüber hinaus zeichnet sich die Erfindung durch konstruktive Einfachheit, hohe Funktionssicherheit und leichte Bedienbarkeit aus.

Anhand der Zeichnungen werden zwei Ausführungsbeispiele der Erfindung erläutert. Es zeigt:

Figur 1 einen Längsschnitt durch eine erfindungsgemäß ausgebildete Einrichtung zum Verbinden eines Werkzeugkopfes mit einer Werkzeugspindel;

Figur 2 einen Querschnitt entlang der Linie II - II in Figur 1 ;

Figur 3 eine Detailansicht einer in Figur 1 gezeigten Einzelheit in vergrößertem Maßstab;

Figur 4 einen der Figur 1 entsprechenden Längsschnitt durch ein anderes Ausführungsbeispiel der Erfindung;

Figur 5 einen der Figur 1 entsprechenden Längsschnitt durch ein weiteres Ausführungsbeispiel der Erfindung.

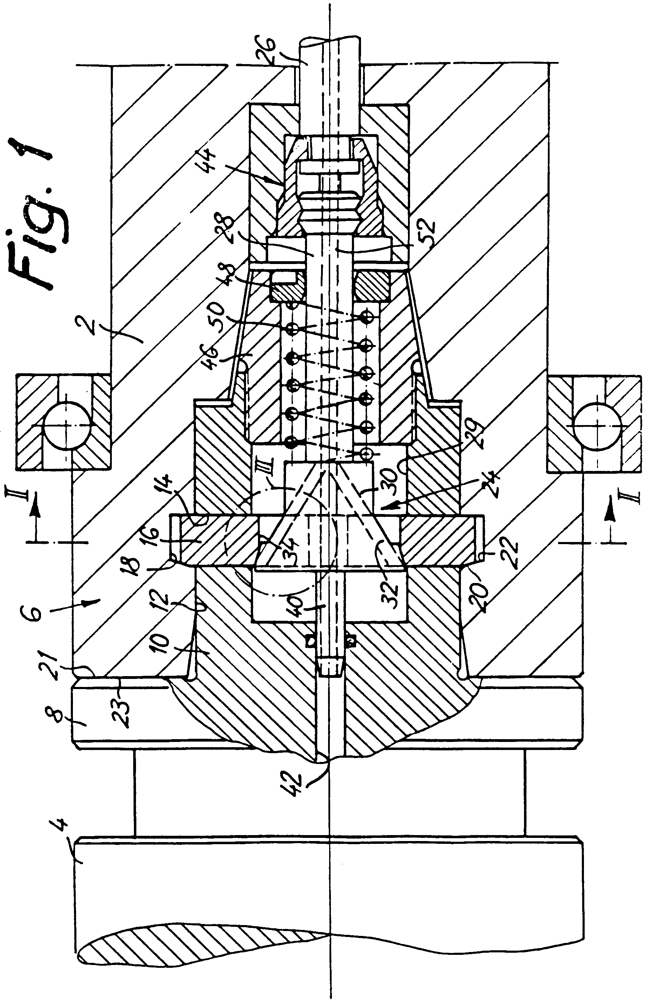

Wie in Figur 1 zu sehen, ist an einer drehbar gelagerten Spindel 2 einer numerisch gesteuerten Werkzeugmaschine (nicht gezeigt) ein Werkzeugkopf 4 mittels einer Verbindungseinrichtung 6 auswechselbar angebracht. Der Werkzeugkopf 4 ist beispielsweise eine Bohrstange, kann jedoch auch ein anderes umlaufendes Werkzeug sein.

Die Verbindungseinrichtung 6 umfaßt einen am hinteren Ende des Werkzeugkopfes 4 angebrachten Flansch 8, von dem ein zur Spindelachse konzentrischer zylindrischer Zapfen 10 abgeht. Der Zapfen 10 ist in eine korrespondierend ausgebildete Bohrung 12 der Spindel 2 eingepaßt.

In einem radialen Durchbruch 14 des Zapfens 10 sind zwei diametral einander gegenüberliegende Keilstücke 16 radial verschieblich gelagert. Die Keilstücke 16 sind zwischen einer radial äußeren Spannstellung und einer radial inneren Freigabestellung verstellbar. In Figur 1 befinden sich die Keilstücke 16 in ihrer Spannstellung, in der sie mit ihren radial äußeren Enden in je eine Vertiefung 18 in der Wand der Bohrung 12 greifen. Hierbei werden sie mit abgeschrägten Flächen 20 gegen abgeschrägte Flächen 22 der Vertiefungen 18 angedrückt, so daß sie auf den Zapfen 10 Spannkräfte ausüben, die den Zapfen 10 in die Bohrung 12 hineinzuziehen suchen. Hierdurch werden die einander zugewandten, in radialen Ebenen liegenden Stirnflächen 21, 23 des Flansches 8 und der Spindel 2 gegeneinander gedrückt.

Zum radialen Verstellen der Keilstücke 16 ist eine Nockeneinrichtung 24 vorgesehen, die über eine zentral angeordnete, durch einen Kraftantrieb hin- und herbewegbare Betätigungsstange 26 betätigt wird.

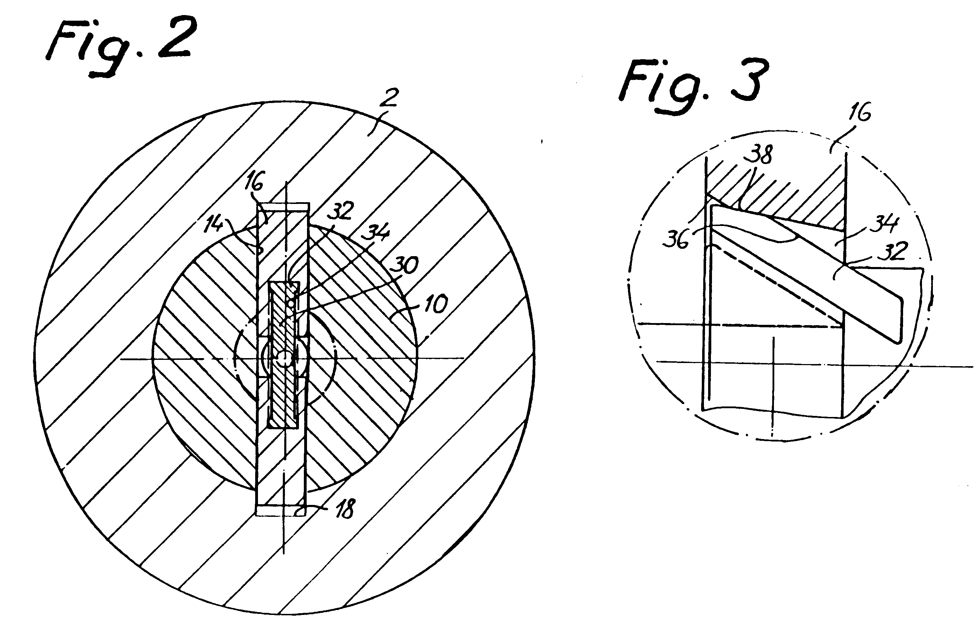

Die Nockeneinrichtung 24 umfaßt einen in Verlängerung und koaxial zu der Betätigungsstange 26 angeordneten Anker 28, an dem ein Nockenteil 30 angeformt ist. Das Nockenteil 30 ist radial innerhalb der Keilstücke 16 in einer Ausnehmung 29 des Zapfens 10 angeordnet (siehe auch Figur 2) und ist auf gegenüberliegenden Seiten mit zwei zur Spindelachse schräg verlaufenden Nockenansätzen 32 versehen, die in Nockennuten 34 der beiden Keilstücke 16 geführt sind. Wie aus Figur 2 ersichtlich, haben die Nockenansätze 32 und die Nockennut 34 einen ungefähr T-förmigen Querschnitt, so daß die beiden Keilstücke 16 von dem Nockenteil 30 in entgegengesetzten Bewegungsrichtungen verstellt werden können.

Figur 3 zeigt, daß die Nockenansätze 32 und die Nockennuten 34 jeweils einen Bereich 36 größerer Steigung und einen Bereich 38 kleinerer Steigung besitzen. Die Bereiche 36 größerer Steigung sorgen für einen beschleunigten Radialhub der Keilstücke 16, während die Bereiche 38 kleinerer Steigung für die Erzeugung der entsprechend großen Spannkräfte benutzt werden.

An dem dem Werkzeugkopf 4 zugewandten Ende des Nockenteils 30 befindet sich ein Führungszapfen 40, der in einer zentrischen Kühlmittelbohrung 42 des Werkzeugkopfes 4 abgedichtet geführt ist. Der am anderen Ende des Nockenteils 30 angeformte Anker 28 ist mit der Betätigungsstange 26 über eine selbsttätig betätigbare Kupplung 44 verbunden. Da die Ausgestaltung der Kupplung 44 herkömmlicher Art sein kann, wird sie nicht im einzelnen beschrieben. Es sei lediglich erwähnt, daß die Kupplung 44 bei einer Verschiebung der Betätigungsstange 26 nach links (in Figur 1) selbsttätig ausgerückt wird, so daß der Anker 28 von der Betätigungsstange 26 freikommt, während bei einer Rückstellbewegung der Betätigungsstange 26 nach rechts (in Figur 1) die Kupplung 44 selbsttätig eingerückt wird, um den Anker 28 mit der Betätigungsstange 26 zu verbinden.

Am freien Ende des Zapfens 10 ist ein Hülsenteil 46 eingeschraubt, an dessen freiem Ende ein Abstützring 48 befestigt ist. Der Abstützring 48 dient zum Abstützen einer Schraubendruckfeder 50, die das Nockenteil 30 und somit die Keilstücke 16 in ihre Freigabestellung vorspannt.

Durch die Betätigungsstange 26, den Anker 28, das Nockenteil 30 und den Führungszapfen 40 erstreckt sich ein Kühlmittelkanal 52, der sich in die Kühlmittelbohrung 42 des Werkzeugkopfes 4 öffnet, so daß das Werkzeug (nicht gezeigt) in einfacher Weise mit Kühlmittel versorgt werden kann.

Die Funktionsweise der beschriebenen Verbindungseinrichtung ist wie folgt:

In der in Figur 1 gezeigten Spannstellung wird die Betätigungsstange 26 - beispielsweise von einem Federtellerpaket (nicht gezeigt) - nach rechts gezogen. Diese axialen Kräfte werden über die Kupplung 24 und den Anker 28 auf das Nockenteil 30 übertragen, das diese Kräfte über die Nockenansätze 32 und die Nockennuten 34 auf die Keilstücke 16 überträgt. Die hierdurch erzeugten radial auswärts gerichteten Spannkräfte drücken die Keilstücke 16 mit ihren abgeschrägten Flächen 20 gegen die abgeschrägten Flächen 22 der Vertiefungen 18 wodurch die Stirnflächen 21, 23 des Werkzeugkopfes 4 und der Spindel 2 gegeneinandergezogen werden.

Da der Zapfen 10 zylindrisch ausgebildet ist, stehen im Bereich der Stirnflächen 21, 23 vergleichsweise große Andruckflächen zur Verfügung, was eine entsprechend große Länge des z. B. als Bohrstange ausgebildeten Werkzeugkopfes 4 erlaubt. Prinzipiell könnte der Zapfen 10 aber auch kegelförmig ausgebildet sein, so daß er in der üblichen kegeligen Aufnahme der Spindel 2 aufgenommen werden könnte.

Um nun den Werkzeugkopf 4 auszuwechseln, führt die Betätigungsstange 26 - z.B. unter der Steuerung eines Hydraulikmotors (nicht gezeigt) - einen Arbeitshub nach links aus. Hierdurch werden der Anker 28 und das Nockenteil 30 um einen entsprechenden Betrag nach links verschoben, wodurch die Keilstücke 16 von der Nockeneinrichtung 24 radial nach innen gezogen werden, bis sie die Vertiefungen 18 des Zapfens 10 vollständig verlassen haben. Gleichzeitig wird die Kupplung 44 ausgerückt, so daß der Anker 28 von der Betätigungsstange 26 freikommt.

Der Werkzeugkopf 4 einschließlich der Nockeneinrichtung 24, des Ankers 28, des Hülsenteils 46, des Abstützrings 48 und der Feder 50 können nun mit relativ geringem Kraftaufwand von der Spindel 2 abgezogen werden. Der Werkzeugkopf 4 kann nun mit Hilfe eines herkömmlichen Handhabungs- und Greifersystems zu einem Werkzeugmagazin bewegt und dort gegen einen anderen Werkzeugkopf 4 ausgetauscht werden.

Während dieser Handhabung drückt die Feder 50 das Nockenteil 30 und damit die Keilstücke 16 in ihre Freigabestellung, so daß die Keilstücke 16 nicht verlorengehen können.

Wenn der neue Werkzeugkopf 4 mit seinem Zapfen 10 in die Bohrung 12 eingesetzt ist, wird die Betätigungsstange 16 nach rechts (in Figur 1) bewegt, wodurch die Kupplung 44 eingerückt und die Keilstücke 16 radial ausgefahren werden. Wegen der unterschiedlich geneigten Bereiche 36, 38 der Nockenansätze 32 und Nockennuten 34 (Figur 3) erfolgt die radial auswärts gerichtete Bewegung der Keilstücke 16 zunächst rasch und am Ende des Bewegungsbereiches langsamer, wobei jedoch in diesem Endbereich der Bewegung entsprechend große Spannkräfte erzeugt werden. Die Verbindungseinrichtung 6 befindet sich dann wieder in ihrer Spannstellung, in der sie den Werkzeugkopf 4 mit der Spindel 2 sicher verbindet.

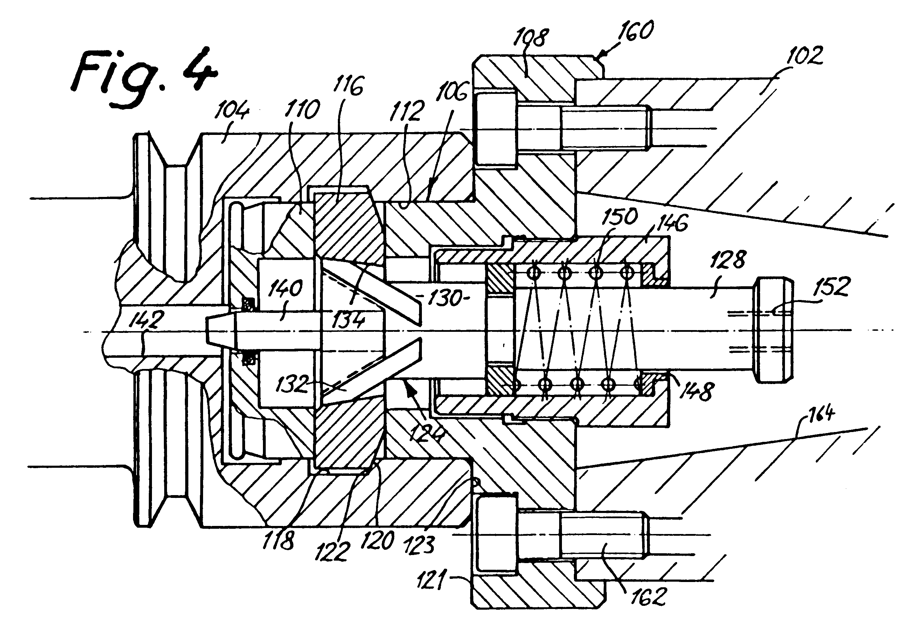

Eine etwas abgewandelte Ausführungsform der in Figur 1 gezeigten Verbindungseinrichtung ist in Figur 4 dargestellt. In Figur 4 sind der Figur 1 entsprechende Einzelteile mit den gleichen Bezugsziffern, jedoch um 100 erhöht, bezeichnet.

Wie aus Figur 4 ersichtlich, ist der prinzipielle Aufbau der Verbindungseinrichtung 106 mit der Nockeneinrichtung 124 einschließlich des Ankers 128 der gleiche wie bei der Ausführungsfom nach Figur 1. Der wesentliche Unterschied der in Figur 4 gezeigten Ausführungsform gegenüber der nach Figur 1 besteht darin, daß in Figur 4 der Zapfen 110 nicht am Werkzeugkopf, sondern an einem gesonderten Vorsatzflanschteil 160 angebracht ist, das mittels Schrauben 162 an der Spindel 102 befestigt ist. Die den Zapfen 110 aufnehmende Bohrung 112 ist in diesem Fall am Werkzeugkopf 104 gebildet.

Hierdurch wird es möglich, daß die Spindel 102 nicht an die erfindungsgemäß ausgebildete Verbindungseinrichtung 106 angepaßt werden muß, sondern daß sie, wie gezeigt, mit der herkömmlichen kegeligen Aufnahme 164 versehen bleiben kann.

Ein weiterer Vorteil der Ausführungsform nach Figur 4 besteht darin, daß bei Abziehen des Werkzeugkopfes 104 in der Freigabestellung der Verbindungseinrichtung 106 das Vorsatzflanschteil 160 einschließlich der Nockeneinrichtung 124, des Ankers 128 und der anderen zugehörigen Teile an der Spindel 102 verbleiben. In diesem Fall braucht daher keine selbsttätig lösbare Kupplung zwischen dem Anker 128 und der Betätigungsstange vorgesehen werden. Auch ist eine Feder 150 nicht unbedingt notwendig, da bei abgezogenem Werkzeugkopf 104 die Keilstücke 116 über den maschinenseitig vorgesehenen Antrieb (nicht gezeigt) in ihrer radial eingezogenen Freigabestellung gehalten werden können. Im übrigen ist die Funktionsweise die gleiche wie bei dem Ausführungsbeispiel nach Figur 1.

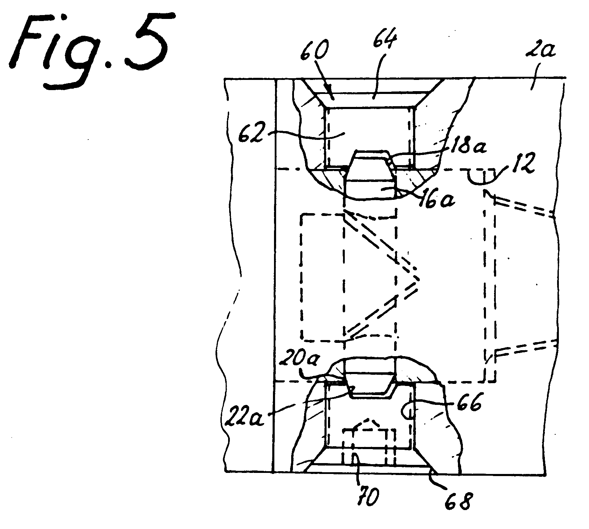

Bei dem in Figur 5 gezeigten Ausführungsbeispiel sind die Vertiefungen 18a der Bohrungswand an Verschleißteilen 60 gebildet, die in der Bohrungswand auswechselbar angebracht sind. Jedes Verschleißteil 60 weist einen Gewindeschaft 62 und einen Kopfabschnitt 64 auf. Der Gewindeschaft 62 ist in eine radial verlaufende Gewindebohrung 66 der Bohrungswand eingeschraubt, während der konisch ausgebildete Kopfabschnitt 64an einer entsprechend konisch ausgebildeten Anlagefläche 68 angrenzend an der Gewindebohrung 66 anliegt.

Jedes Verschleißteil 60 ist mit einer von außen zugänglichen Schlüsselaufnahme 70 versehen. Hierdurch lassen sich die Verschleißteile 60 in die Gewindebohrungen 66 einschrauben, bis ihre Kopfabschnitte 64 an den konischen Anlageflächen 68 anliegen. Die Verschleißteile 60 sind somit radial und axial bezüglich der Bohrung 12a festgelegt.

Die Verschleißteile sind auf ihrer dem Innenraum der Bohrung 12 zugewandten Ende mit der Vertiefung 18a versehen, deren abgeschrägte Fläche 22a im vorliegenden Ausführungsbeispiel konisch ausgebildet ist. Ebenfalls konisch ausgebildet ist die abgeschrägte Fläche 20a der Keilstücke 16a.

Die Verwendung gesonderter Verschleißteile hat den Vorteil, daß bei Abnutzung der abgeschrägten Flächen 22a die Verschleißteile gegen neue Verschleißteile ausgewechselt werden können.

## Patentansprüche

1. Einrichtung zum Verbinden eines auswechselbaren Werkzeugkopfes mit der Spindel (2; 102) einer numerisch gesteuerten Werkzeugmaschine, mit einem zur Spindelachse konzentrischen Zapfen (10; 110), der in eine entsprechend dimensionierte Bohrung (12; 112) greift, wobei der Zapfen (10) oder die Bohrung (112) unlösbar mit dem Werkzeugkopf verbunden ist und das jeweils andere Element (10; 12) mit der Spindel (102) kuppelbar bzw. als Bestandteil der Spindel (2) ausgebildet ist, mehreren Keilstücken (16; 116), die in dem Zapfen (10; 110) in zur Spindelachse radialer Richtung verschiebbar gelagert sind, und einer Betätigungseinrichtung zum Verstellen der Keilstücke zwischen einer Spannstellung, in der sie mit abgeschrägten Flächen (20; 120) in entsprechend abgeschrägte Vertiefungen (18, 22; 118, 122) der Bohrungswand greifen, um eine am Zapfen angrenzende ringförmige Stirnfläche (21; 121) gegen eine an der Bohrung angrenzende ringförmige Stirnfläche (23; 123) zu ziehen, und einer Freigabestellung, in der die Keilstücke radial nach innen aus den Vertiefungen in der Bohrungswand herausbewegt sind, um den Zapfen zum Werkzeugwechsel aus der Bohrung abziehen zu können, wobei die Betätigungseinrichtung eine Nockeneinrichtung (24; 124) umfaßt, über die die Keilstücke (16; 116) mit einem zur Spindelachse konzentrischen Anker (28; 128) verbunden sind, welcher Anker mit einer in der Spindel koaxial untergebrachten, hin- und herbewegbaren Betätigungsstange (26) verbindbar ist, wobei die Nockeneinrichtung (24; 124) Nockenansätze (32; 132) aufweist, die in entsprechend ausgebildeten Nockennuten (34; 134) der Keilstücke (16; 116) zwangsgeführt sind, um die Keilstücke (16; 116) in beiden radialen Richtungen verstellen zu können, wobei die Nockenansätze (32; 132) an einem Nockenteil (30; 130) vorgesehen sind, das an dem Anker (28; 128) angeformt ist, wobei der Anker (28) an seinem von der Betätigungsstange (26) abgewandten Ende mit einem zentrischen Führungszapfen (40) versehen ist, der in einer im Zapfen (10; 110) gebildeten Kühlmittelbohrung (42) abgedichtet geführt ist, und wobei der Anker (28) einschließlich seines Führungszapfens (40) mit einer durchgehenden Kühlmittelbohrung (52) versehen ist.

2. Einrichtung nach Anspruch 1, dadurch gekennzeichnet, daß die Nockennuten (34; 134) und -ansätze (32; 132) einen T-förmigen Querschnitt haben.

3. Einrichtung nach Anspruch 1 oder 2, dadurch gekennzeichnet, daß die Nockennuten (34; 134) und -ansätze (32; 132) einen Bereich größerer Neigung (36) für einen beschleunigten Radialhub und einen Bereich geringerer Neigung (38) für die Erzeugung der Spannkräfte aufweisen.

4. Einrichtung nach Anspruch 1, 2 oder 3, dadurch gekennzeichnet, daß der Zapfen (10) mit den Keilstücken (16) am Werkzeugkopf (4) und die Bohrung (12) an der Spindel (2) vorgesehen ist und der im Werkzeugkopf (4) angeordnete Anker (28) durch eine selbsttätig lösbare Kupplung (44) mit der Betätigungsstange (26) verbunden ist, so daß beim Wechseln des Werkzeugkopfes (4) die Keilstücke (16), die Nockeneinrichtung (24) und der Anker (28) mit dem Zapfen (10) aus der Bohrung (12) abgezogen werden.

5. Einrichtung nach Anspruch 4, dadurch gekennzeichnet, daß die Keilstücke (16) durch eine am Anker (28) angreifende Feder (50) in ihre Freigabestellung vorgespannt sind.

6. Einrichtung nach Anspruch 1, 2 oder 3, dadurch gekennzeichnet, daß der Zapfen (110) mit den Keilstücken (116) an einem an der Spindel (102) befestigten Vorsatzflanschteil (160) und die Bohrung (112) am Werkzeugkopf (104) vorgesehen ist, so daß beim Wechseln des Werkzeugkopfes (104) die Keilstücke (116), die Nockeneinrichtung (124) und der Anker (128) am Vorsatzflanschteil (160) und somit an der Spindel (102) verbleiben.

7. Einrichtung nach einem der vorhergehenden Ansprüche, dadurch gekennzeichnet, daß die Vertiefungen (18a) der Bohrungswand in auswechselbaren Verschleißteilen (60) gebildet sind, die an der Bohrungswand radial und axial festgelegt sind.

8. Einrichtung nach Anspruch 7, dadurch gekennzeichnet, daß jedes der Verschleißteile (60) einen in die Bohrungswand einschraubbaren Gewindeschaft (62) und einen an einer Anlagefläche (68) der Bohrungswand festgelegten Kopfabschnitt (64) aufweist.

9. Einrichtung nach einem der vorhergehenden Ansprüche, dadurch gekennzeichnet, daß die abgeschrägten Flächen der Keilstücke (16a) und der Vertiefungen (16a) als konusförmige Flächen (20a, 22a) ausgebildet sind.

## Claims

1. A connection system for connecting an interchangeable tool head to a spindle (2; 102) of a numerically controlled tooling machine, comprising a projection (10; 110) concentric to the spindle axis and projecting into a matingly shaped bore (12; 112), said projection (10) or said bore (112) being integral with the tool head and the other (110; 12) of these elements being adapted to be coupled to said spindle (102) or is integral with said spindle (2), a plurality of wedge members (16; 116) supported in said projection (10; 110) for movements in radial directions with respect to the spindle axis, and actuating means for displacing the wedge members between a clamping position and a release position, with the wedge members having inclined surfaces (20; 120) which when the wedge members are in their clamping positions engage correspondingly inclined recesses (18, 20; 118, 122) in the boring wall in order to draw an annular face (21; 121) adjacent to the projection against an annular face (23; 123) adjacent to the bore, and with wedge members in their release positions having been removed from the recesses in the boring wall by radially inwards movements in order to allow for withdrawal of the projection from the bore for a tool change, said actuating means comprising cam means (24; 124) connecting the wedge members (16; 116) to an anchor member (28; 128) concentric to the spindle axis, which anchor member is adapted to be coupled to an actuating rod (26) coaxially arranged and reciprocable in the spindle, the cam means (24; 124) comprising cam projections (32; 132) associated to the anchor member (28; 128) and positively driven by means of matingly shaped cam grooves (34; 134) of the wedge members (16; 116) in order to enable displacement of the wedge members (16; 116) in opposite radial directions, said cam projections (32; 132) being provided on a cam member (30; 130) integral with the anchor member (28; 128), said anchor member (28) being provided with a central projecting guide member (40) sealingly and slidingly received in a cooling fluid bore (42) formed in said projection (10; 110), and said anchor member (28) including its guide member (40) being provided with a continuous cooling fluid bore (52).

2. The connection system of claim 1 or claim 2, characterized in that said cam grooves (34; 134) and cam projections (32; 132) are of a T-shaped cross-section.

3. The connection system of claim 1 or claim 2, characterized in that said cam grooves (34; 134) and cam projections (32; 132) each comprise a section of relatively great inclination (36) to allow for rapid radial advance, and a section of relatively small inclination (38) for generating the clamping forces.

4. The connection system of claim 1, 2 or 3, characterized in that said projection (10) and the wedge members (16) are provided on the tool head (4) and said bore (12) is provided in the spindle (2), and in that said anchor member (28) which is disposed in the tool head is connected to the actuating rod (26) by an automatically releasable coupling (44) such that when changing the tool head (4) the wedge members (16), the cam means (24) and the anchor member (28) are withdrawn from the bore (12) together with said projection (10).

5. The connection system of claim 4, characterized in that the wedge members (16) are biased into their release positions by resilient means (50) engaging said anchor member (28).

6. The connection system of claim 1, 2 or 3, characterized in that said projection (110) and the wedge members (116) are provided at a separate flange member (16) fixed to the spindle (102), and said bore (112) is provided in the tool head (104) such that when changing the tool head (104) the wedge members (116), the cam means (124) and the anchor member (128) remain on said separate flange member (116) and accordingly on the spindle (102).

7. The connection system of any of the preceding claims, characterized in that the recesses (18a) of the bore wall are provided in replaceable wear members (60), which are radially and axially fixed on the bore wall.

8. The connection system of claim 7, characterized in that each of the wear members (60) comprises a threaded shaft (62) adapted to threadingly engage the bore wall, and a head portion (64) in abutting engagement with an abutment surface (68) of the bore wall.

9. The connection system of any of the preceding claims, characterized in that the inclined surfaces of wedge members (16a) and recesses (18a) are comprised of conical surfaces (20a, 22a).

**Revendications**

1. Dispositif pour accoupler un porte-outil, échangeable, à la broche (2, 102) d'une machine-outil à commande numérique, comportant un tourillon (10, 110) qui est concentrique à l'axe de la broche et qui entre dans un perçage (12, 112) de dimensions correspondantes, le tourillon (10) ou le perçage (112) étant accouplé de façon non démontable au porte-outil, et l'autre de ces éléments (12, 110) peut être chaque fois accouplé à la broche (102) ou font partie de la broche (2), plusieurs clavettes (16, 116) qui sont montées coulissantes dans le sens radial par rapport à l'axe de la broche, et un dispositif d'actionnement pour déplacer les clavettes entre une position de serrage, dans laquelle elles entrent par des surfaces chanfreinées (20, 120) dans des cavités (18, 22 ; 118, 122), chanfreinées de façon correspondante, dans la paroi du perçage, pour tirer une surface frontale annulaire (21, 121), attenante au tourillon, contre une surface frontale annulaire (23, 123) contiguë au perçage, et une position de libération dans laquelle les clavettes sont radialement déplacées vers l'intérieur et sorties des cavités de la paroi de perçage, pour permettre d'extraire le tourillon du perçage afin d'effectuer un changement d'outil, dispositif dans lequel le dispositif d'actionnement comprend un dispositif à cames (24 ; 124) par l'intermédiaire duquel les clavettes (16 ; 116) sont reliées à un tirant (28 ; 128) concentrique à l'axe de la broche et qui peut être accouplé à une tige d'actionnement (26) logée coaxialement dans la broche et déplaçable à va-et-vient et le dispositif à cames (24 ; 124) comporte des saillants à cames (32 ; 132) qui sont guidés de façon forcée dans des rainures de cames (34 ; 134) des clavettes (16 ; 116) ou de la tige d'actionnement, pour pouvoir déplacer radialement les clavettes (16, 116) dans les deux sens.

2. Dispositif selon la revendication 1, caractérisé en ce que les rainures de cames (34 ; 134) et saillants à cames (32 ; 132) ont une section transversale en forme de T.

3. Dispositif selon la revendication 1 ou 2, caractérisé en ce que les rainures de cames (34 ; 134) et les saillants à cames (32 ; 132) comportent une région de grande pente (36) pour avoir une course radiale accélérée et une région de faible pente (38) pour obtenir les forces de serrage.

4. Dispositif selon l'une des revendications 1 à 3, caractérisé en ce que le tourillon (10) est prévu avec les clavettes (16) sur le porte-outil (4) et le perçage (12, sur la broche (2), et que le tirant (28) disposé dans le porte-outil (4) est rattaché par un accouplement automatiquement détachable (44) à la tige d'actionnement (26), de sorte que, lors du changement du porte-outil (4), les clavettes (16), le dispositif à cames (24) et le tirant (28) sont détachés avec le tourillon (10) hors du perçage (12).

5. Dispositif selon la revendication 4, caractérisé en ce que les clavettes (16) sont précontraintes par un ressort (50) agissant sur le tirant (28) dans sa position de libération.

6. Dispositif selon l'une des revendications 1 à 3, caractérisé en ce que le tourillon (110) est prévu avec les clavettes (116) sur une collerette d'adaptation (160) fixée à la broche (102), et le perçage (112) est prévu sur le porte-outil (104), de sorte que, lors du changement du porte-outil (104), les clavettes (116), le dispositif à cames (124) et le tirant (128) restent sur la collerette d'adaptation (160) et ainsi, sur la broche (102).

7. Dispositif selon l'une des revendications précédentes; caractérisé en ce que les cavités (18a) dans la paroi du perçage sont constitués par des pièces d'usure (60) remplaçables qui sont fixées radialement et axialement sur la paroi du perçage.

8. Dispositif selon la revendication 7, caractérisé en ce que chacune des pièces d'usure (60) comporte une tige filetée (62) se vissant dans la paroi du perçage et une tête (64) fixée dans une surface d'application (68) de la paroi du perçage.

9. Dispositif selon l'une des revendications précédentes, caractérisé en ce que les surfaces chanfreinées des clavettes (16a) et des cavités (18a) sont constituées sous forme de surfaces coniques (20a, 22a).

Fig. 1

EP 0 185 842 B2

Fig. 3

Fig. 2

Fig. 4

Fig.5